(19) Europäisches Patentamt
European Patent Office
Office européen des brevets

(11) EP 1 701 136 A1

(12) EUROPÄISCHE PATENTANMELDUNG

(43) Veröffentlichungstag:
13.09.2006 Patentblatt 2006/37

(51) Int Cl.:
G01D 5/241 (2006.01)  G01L 3/10 (2006.01)
G01L 5/22 (2006.01)

(21) Anmeldenummer: 06004703.2

(22) Anmeldetag: 08.03.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 09.03.2005 DE 102005010909

(71) Anmelder: Methode Electronics International
GmbH
55435 Gau-Algesheim (DE)

(72) Erfinder:
• Khoury, Joseph, Elias, Dr.
55457 Gensingen (DE)
• Walther, Hans-Jürgen
65201 Wiesbaden (DE)
• Korn, Jürgen
55413 Oberheimbach (DE)

(74) Vertreter: Haft, von Puttkamer,
Berngruber, Czybulka
Patentanwälte
Franziskanerstrasse 38
81669 München (DE)

(54) **Kapazitiver Kraft- und Winkelsensor**

(57) Die Erfindung betrifft einen Kraft- und Winkelsensor zur Messung des Drehwinkels einer Welle (3) und einer auf einen Torsionsstab (303) ausgeübten Kraft, der zwei Wellenteile (32, 33) der Welle (3) miteinander verbindet. In einem Gehäuse (2), durch das die Welle (3) verläuft, sind eine in Bezug auf das Gehäuse (2) drehfest angeordnete Hauptleiterplatte (4), die eine mittige Öffnung (12) besitzt, durch die die Welle (3) verläuft, an einer Seite der Hauptleiterplatte (4) eine drehfest auf dem einen Wellenteil (32) angeordnete erste Leiterplatte (5) zur Messung des Drehwinkels, die eine mittige Öffnung (51) besitzt, durch die das eine Wellenteil (32) verläuft, und an der anderen Seite der Hauptleiterplatte (4) eine drehfest mit dem anderen Wellenteil (33) verbundene zweite Leiterplatte (6) zur Messung der Kraft angeordnet, welche eine mittige Öffnung (51) besitzt, durch die das andere Wellenteil (33) verläuft. Die Ebenen der Hauptleiterplatte (4), der ersten Leiterplatte (5) und der zweiten Leiterplatte (6) verlaufen jeweils senkrecht zur Längsachse der Welle (3). An den einander zugewandten Flächen der Hauptleiterplatte (4) und der ersten Leiterplatte (5) sowie an den einander zugewandten Flächen der Hauptleiterplatte (4) und der zweiten Leiterplatte sind zur Messung des Drehwinkels bzw. der Kraft sich gegenüber liegend Elektroden zur kapazitiven Messung der Verdrehung zwischen der ersten Leiterplatte (5) und der Hauptleiterplatte (4) bzw. der Verdrehung zwischen der zweiten Leiterplatte (6) und der ersten Leiterplatte (5) angeordnet.

Fig.2

**Beschreibung**

Die vorliegende Erfindung betrifft einen kapazitiven Kraft- und Winkelsensor nach dem Oberbegriff des Patentanspruches 1.

Bei Kraftfahrzeugen ist es bekannt, sowohl den Drehwinkel der Lenksäule, um den die Lenksäule beim Fahren des Kraftfahrzeuges gedreht wird, als auch die auf die Lenksäule ausgeübte Kraft, d.h. also den Torsionswinkel der Lenksäule zu messen. Der Torsionswinkel wird über einen ebenfalls bekannten Torsionsstab erzeugt, der sich innerhalb der Lenksäule befindet und zwei Wellenteile der Lenksäule miteinander verbindet.

Die Aufgabe der vorliegenden Erfindung besteht darin, einen möglichst kompakten und eine geringe Bauhöhe aufweisenden Kraft- und Winkelsensor zu schaffen, der relativ einfach und platzsparend beispielsweise an der Lenksäule eines Kraftfahrzeuges montierbar ist.

Diese Aufgabe wird durch einen Kraft- und Winkelsensor mit den Merkmalen des Patentanspruches 1 gelöst.

Der wesentliche Vorteil der Erfindung besteht darin, dass der vorliegende Kraft- und Winkelsensor eine derart geringe Bauhöhe besitzt, dass er beispielsweise in das Gehäuse der Wickelfeder eines an der Lenksäule eines Kraftfahrzeuges angeordneten Airbag-Auslösesystems, das dem Gasgenerator des Airbags vorgeschaltet ist, integriert werden kann. Dabei können gleichzeitig sowohl die auf die Lenksäule ausgeübte Kraft durch eine Torsionsmessung als auch der Winkel gemessen bzw. erfasst werden, um den die Lenksäule gedreht wird.

Vorteilhafte Ausgestaltungen der Erfindung gehen aus den Unteransprüchen hervor.

Im Folgenden werden die Erfindung und deren Ausgestaltungen im Zusammenhang mit den Figuren näher erläutert. Es zeigen:

Figur 1          in schematischer Darstellung einen Schnitt durch den erfindungsgemäßen Kraft- und Winkelsensor;

Figur 2          eine perspektivische Explosionsdarstellung des erfindungsgemäßen Kraft- und Winkelsensors;

Figur 3          den erfindungsgemäßen Kraft- und Winkelsensor der Figur 2 im zusammengebauten Zustand;

Figur 4          den Aufbau der einzelnen Leiterplatten des erfindungsgemäßen Kraft- und Winkelsensors;

Figuren 5 und 6    Darstellungen zur Erläuterung der Funktion des erfindungsgemäßen Kraft- und Winkelsensors;

Figuren 7 und 8    Darstellungen zur Erläuterung einer Weiterbildung der Erfindung; und

Figur 9          ein Blockschaltbild der bevorzugten Elektronik des erfindungsgemäßen Kraft- und Winkelsensors.

Der vorliegende Kraft- und Winkelsensor 1 besteht im Wesentlichen aus einem Gehäuse 2, das an einer Welle, insbesondere der Lenksäule 3 eines Kraftfahrzeuges, anordenbar ist, einer Hauptleiterplatte 4, einer reflektierenden Leiterplatte 5 zur Messung des Drehwinkels und einer reflektierenden Leiterplatte 6 zur Messung der Kraft bzw. des Drehmomentes. Die Lenksäule 3 verläuft durch eine Öffnung des Gehäuses 2 derart, dass sie im Bezug auf das statisch angeordnete Gehäuse 2 verdrehbar ist. Das Gehäuse 2 ist beispielsweise in einem nicht näher dargestellten Gehäuse der Wickelfeder eines Airbag-Auslösesystems befestigt. Vorzugsweise besteht das Gehäuse 2 aus zwei Gehäuseteilen 21 und 22, die in der Längsrichtung der Lenksäule 3 gesehen, nebeneinander angeordnet und aneinander befestigt sind. Das Gehäuseteil 21 besitzt eine mittige Öffnung 23 und das Gehäuseteil 22 besitzt eine mittige Öffnung 24. Die Lenksäule 3 verläuft durch diese Öffnungen 23 und 24.

Jedes Gehäuseteil 21, 22 umfasst ein senkrecht zur Lenksäule 3 verlaufendes Wandteil 25 bzw. 26 und ein an dieses radial außen angesetztes Flanschteil 27 bzw. 28, das in Richtung der Lenksäule 3 verläuft. Die Flanschteile 27 und 28 sind aneinander befestigt, vorzugsweise aneinander verschraubt, so dass sie einen Aufnahmeraum für die Hauptleiterplatte 1 und die Leiterplatten 5 und 6 bilden.

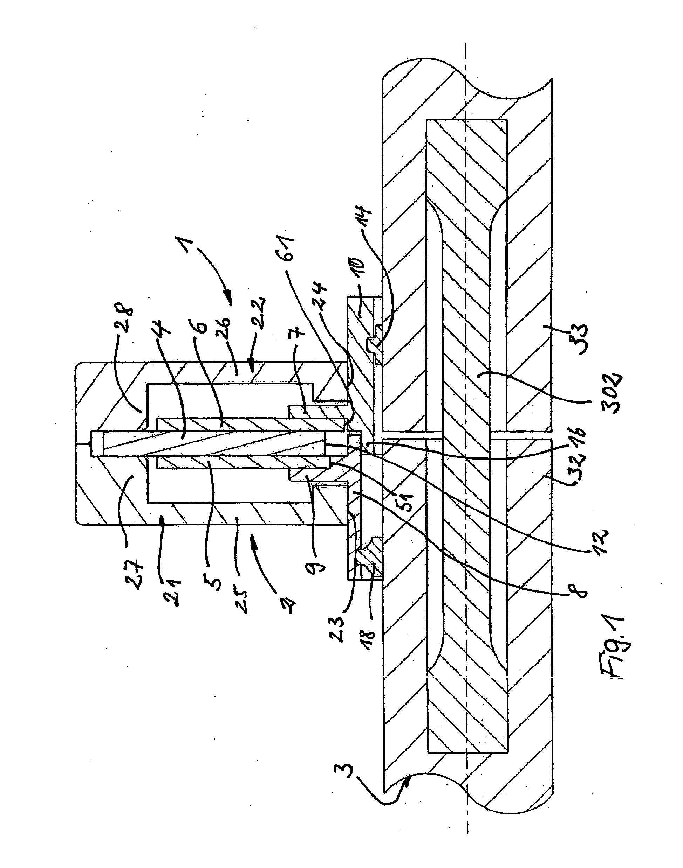

Die Lenksäule 3 ist im Bereich des Gehäuses 2 in zwei Wellenteile 32, 33 unterteilt, die gemäß Figur 1 axial zueinander ausgerichtet und über einen Torsionsstab 302 miteinander verbunden sind, der jeweils mit einer Seite in ein Wellenteil 32 bzw. 33 drehfest eingreift.

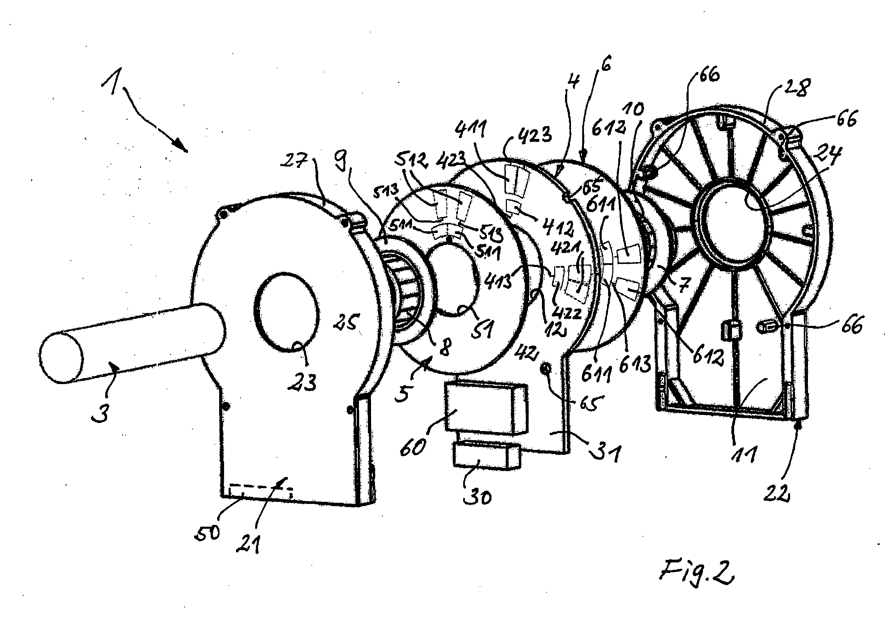

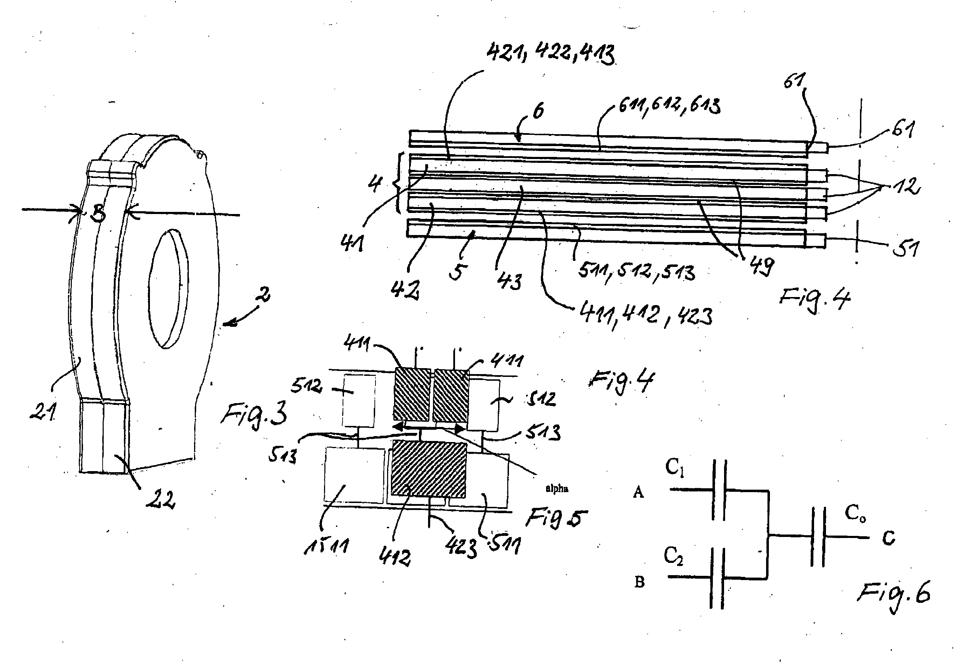

Die Figur 4 zeigt in schematischer Darstellung den Aufbau der vorzugsweise kreisförmig ausgebildeten Hauptleiterplatte 4 sowie der reflektierenden Leiterplatten 5 und 6, die vorzugsweise ebenfalls kreisförmig ausgebildet sind. Die Hauptleiterplatte 4 besteht vorzugsweise aus einem dreilagigen Leiterplattenverbund in Laminartechnik, der später näher erläutert werden wird. Die Leiterplatte 5 weist an ihrer der Hauptleiterplatte 4 zugewandten Seite die Sendeelektroden 511, die Empfangselektroden 512 sowie entsprechende Leiterbahnen 513 auf. Die Leiterplatte 6 weist an ihrer der Hauptleiterplatte 4 zugewandten Seite die Sendeelektroden 611, die Empfangselektroden 612 sowie Leiterbahnen 613 auf. Die zwischen den Leiterplatten 5, 6 angeordnete Hauptleiterplatte 4 umfasst eine mittlere Trägerschicht 43, ein der Leiterplatte 6 zugewandtes Leiterplattenteil 41 und ein der Leiterplatte 5 zugewandtes Leiterplattenteil 42. Das Leiterplattenteil 41 weist an seiner, der Leiterplatte 6 zugewandten Seite die Sendeelektroden 421, die Empfangselektroden 422 sowie entsprechende Leiterbahnen 413 auf. Das Leiterplattenteil 42 weist an seiner der Leiterplatte 5 zugewandten Seite die Sendeelektroden 411, die Empfangselektroden 412 und Leiterbahnen 423 auf (siehe auch Figur 2). Die genannten Leiterbahnen, Sende- und Empfangselektroden weisen vorzugsweise die Form von auf ihren jeweiligen Tragern angeordneten Metall- oder Kupferbahnen auf.

Die Leiterplattenteile 41 und 42 besitzen an den der Trägerschicht 43 zugewandten Seiten jeweils Leiterbahnen 49, die über entsprechende Durchkontaktierungen (nicht dargestellt) Verbindungen zwischen den Leiterbahnen 413 des Leiterplattenteiles 41 bzw. zwischen den Leiterbahnen 423 des Leiterplattenteiles 42 und äußeren Kontaktelementen 30 herstellen, die vorzugsweise in der Form einer Kontaktleiste oder dergleichen an einem nach außen über die Umfänge der Leiterplattenteile 41, 42 sowie der Trägerschicht 43 verlängerten Bereich 31 befestigt sind. In diesem Bereich 31 kann auch, wie dies die Figur 2 zeigt, neben den Kontaktelementen 30 ein eine Auswerteelektronik 60 bildendes Bauteil, z.B. in der Form eines Mikro-Controllers, angeordnet sein.

Die Hauptleiterplatte 4 ist am Gehäuse 2 drehfest angeordnet, wobei vorzugsweise im Gehäuse 2 eine Aussparung 11 vorgesehen ist, in die der radial über den Umfang der kreisförmig ausgestalteten Hauptleiterplatte 4 hinausragende Bereich 31 eingreift. Vorzugsweise weist die Aussparung 11 die Form einer zum gegenüberliegenden Gehäuseteil 21 offenen Vertiefung im Gehäuseteil 22 auf, die nach dem Einsetzen des Bereiches 31 der Hauptleiterplatte 4 durch das andere Gehäuseteil 21 verschlossen wird, wenn dieses am Gehäuseteil 22 befestigt ist. Die Kontaktelemente 30 sind dann von außen her über eine Gehäuseaussparung 50 zugänglich. Der Bereich 31 ist in der Aussparung 11 festgelegt, so dass relative Drehbewegungen zwischen dem Gehäuse 2 und der Hauptleiterplatte 4 ausgeschlossen sind. Eine Festlegung kann jedoch auch mit anderen Mitteln erfolgen.

Die Wandteile 25, 26 der Gehäuseteile 21 bzw. 22 sind vorzugsweise ebenfalls kreisförmig ausgebildet.

Die Hauptleiterplatte 4 oder vorzugsweise die miteinander verbundenen, zweckmäßigerweise kreisförmig ausgebildeten Leiterplattenteile 41 und 42 sowie die Trägerschicht 43, die vorzugsweise ebenfalls kreisförmig ausgebildet ist, besitzen jeweils eine mittige Öffnung 12, durch die nach der Montage des Kraft- und Winkelsensors 1 die Lenksäule 3 hindurch verläuft.

Die vorzugsweise verwendete Leiterplatte 5 zur Messung des Drehwinkels besitzt eine mittige Öffnung 51, durch die die Lenksäule 3 hindurch verläuft. Die Leiterplatte 6 besitzt eine entsprechende mittige Öffnung 61. Die Leiterplatte 5 zur Messung des Drehwinkels ist drehfest mit dem Wellenteil 32 und somit auch mit der einen Seite des Torsionsstabes 302 verbunden. Hierzu ist die Leiterplatte 5 vorzugsweise auf einem drehfest auf dem Wellenteil 32 angeordneten Buchsenteil 8 angeordnet, das im Montagezustand durch die Öffnung 23 des Gehäuseteiles 21, durch die Öffnung 12 der Hauptleiterplatte 4 sowie die Öffnung 51 der Leiterplatte 5 verläuft, wobei das Gehäuseteile 21 und das Leiterplattenteil 41 der Hauptleitereiterplatte 4 in Bezug auf das Buchsenteil 8 verdrehbar gelagert sind.

Das Buchsenteil 8 weist ein radial vorstehendes Flanschelement 9 auf, an dem im Montagezustand die Leiterplatte 5 anliegt, wobei zur drehfesten Verbindung der Leiterplatte 5 mit dem Buchsenteil 8 das Flanschelement 9 vorzugsweise an der Leiterplatte 5 verrastet ist. Bei einer Verdrehung der Lenksäule 3 wird daher zur Messung des Drehwinkels die drehfest auf der Lenksäule 3 befestigte Leiterplatte 5 zur Messung des Drehwinkels in Bezug auf die drehfest am Gehäuse 2 angeordnete Hauptleiterplatte 4 verdreht. Das zugeordnete Verfahren zur Messung des Drehwinkels wird später näher erläutert.

Das Buchsenteil 8 und das später näher erläuterte Buchsenteil 10 sind jeweils über Mitnehmerteile 18 bzw. 14 mit dem Wellenteil 32 bzw. mit dem Wellenteil 33 und somit auch mit dem Torsionsstab 302 verbunden.

Gemäß Figur 1 ist die Leiterplatte 6 zur Kraftmessung bzw. zur Messung des Drehmomentes über eine Mitnehmereinrichtung drehfest mit dem Wellenteil 33 verbunden, wobei zur Messung des Drehmomentes der Torsionsstab 302 das Drehmoment über den Verdrehwinkel des Wellenteiles 33 in Bezug auf das Wellenteil 32 der Lenksäule 3 liefert.

Die Mitnehmereinrichtung weist die Form eines Buchsenteiles 10 auf, das ein radial vorstehendes Flanschelement 7 besitzt, an dem im Montagezustand die Leiterplatte 6 anliegt, wobei zur drehfesten Verbindung der Leiterplatte 6 mit dem Buchsenteil 10 das Flanschelement 7 an der Leiterplatte 6 befestigt, vorzugsweise verrastet ist.

Im Montagezustand verläuft das Buchsenteil 10 durch die Öffnung 24 des Gehäuseteiles 22 und vorzugsweise durch die Öffnung 12 der Hauptleiterplatte 4 bzw. der Leiterplattenteile 41, 42 und der Trägerschicht 43. Zweckmäßigerweise greift ein axialer Vorsprungbereich 16 des Buchsenteiles 10 aus Stabilitäts- und Lagergründen in die Öffnung des Buchsenteiles 8 ein. Alternativ kann auch ein Vorsprungbereich des Buchsenteiles 8 in die Öffnung des Buchsenteiles 10 eingreifen. Das Gehäuseteil 22 und die Hauptleiterplatte 4 sind in Bezug auf die Lenksäule 3 verdrehbar angeordnet.

Wegen der erläuterten Bauweise und der engen Anordnung seiner Bestandteile in axialer Richtung aneinander besitzt der vorliegende Kraft- und Winkelsensor 1, selbst wenn er die Auswerteelektronik 60 umfasst, eine Bauhöhe B (Figur 3), die sehr klein ist und unter 8 mm liegen kann.

Allgemein gesagt, erfolgt die Messung des Drehwinkels über die radiale Verdrehung der an der Lenksäule 3 bzw. an dem Wellenteil 32 der Lenksäule 3 befestigten Leiterplatte 5 in Bezug auf die am Gehäuse 2 befestigte Hauptleiterplatte 4.

Die Kraftmessung erfolgt über die Torsion des Wellenteiles 32 der Lenksäule 3 in Bezug auf das Wellenteil 33 der Lenksäule 3, wobei die Federrate des Torsionsstabes 302 das Drehmoment über den Verdrehwinkel liefert. Der Verdrehwinkel des Torsionsstabes 302 wird über die relative Verdrehung der Leiterplatte 6 zur Messung der Kraft in Bezug auf die Leiterplatte 5 zur Messung des Drehwinkels, d.h. also über die Verdrehung des Torsionsstabes 302 gemessen. Vorzugsweise wird die relative Verdrehung über zwei separate Winkelmessungen durchgeführt. Die erste Winkelmessung wird aus einer Drehwinkelmessung mit der Leiterplatte 5 ermittelt. Die zweite Winkelmessung wird mit der Leiterplatte 6 ermittelt. Die Differenz der beiden Winkel ergibt den Verdrehungswinkel. Dieser Verdrehungswinkel ist proportional zum Drehmoment, das auf dem Torsionsstab 302 lastet.

Die Wellenteile 32, 33 der Lenksäule 3 sowie der Torsionsstab 302 sind nicht direkter Bestandteil des vorliegenden Sensorsystems.

Im folgenden wir das kapazitive Messverfahren mit dem vorliegenden Kraft- und Winkelsensor näher erläutert. An den einander zugewandten Flächen weisen die Leiterplattenteile 41, 42 sowie die Leiterplatten 5, 6 jeweils die bereits genannten Sendeelektroden 411, 421, 511, bzw. 611 auf. Außerdem weisen die genannten Flächen der Hauptleiterplatte 4 sowie der Leiterplatten 5, 6 jeweils die bereits genannten Empfangselektroden 412, 422, 512, bzw. 612 auf. Die genannten Elektroden sind jeweils über einen Umfang eines vorgegebenen Durchmessers der genannten Leiterplattenteile bzw. Leiterplatten gleichmäßig verteilt angeordnet, wobei jeweils die Sendelektroden der Hauptleiterplatte 4 Empfangselektroden der Leiterplatten 5, 6 auf einem, vorzugsweise einem größeren Durchmesser gegenüberliegen, während die Empfangselektroden der Leiterplattenteile 41, 42 Sendeelektroden der Leiterplatten 5, 6 auf einem, vorzugsweise kleineren Durchmesser gegenüberliegen. Die einzelnen Elektroden bestehen vorzugsweise jeweils aus Kupfer das auf dem isolierenden Material der hauptleiterplatte 4 bzw. der Leiterplatten angeordnet ist. Sie besitzen jeweils die Form von Kreissektoren oder eine Dreieckform. In der Figur 2 sind von jeder Elektrodenart der Einfachheit halber nur zwei Elektroden gezeigt, wobei die an sich nicht sichtbaren Elektroden durch unterbrochene Linien dargestellt sind.

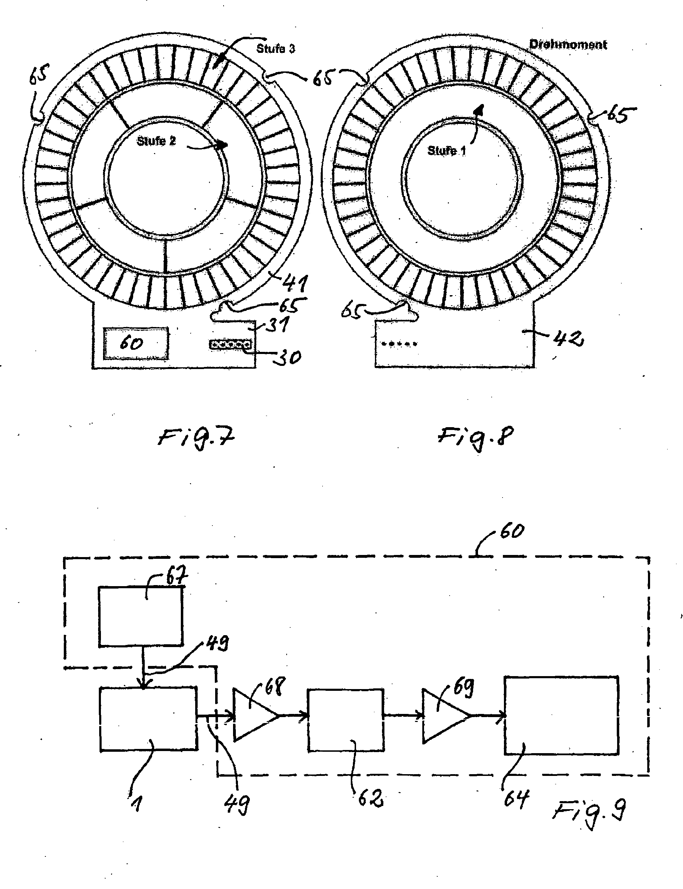

Die Figur 5 zeigt dies beispielhaft an einer vereinfachten Darstellung für die Sendeelektroden 411 des Leiterplattenteiles 41, die gegenüberliegenden Empfangselektroden 512 der Leiterplatte 5 sowie die Sendelektroden 511 der Leiterplatte 5 und die gegenüberliegenden Empfangselektroden 412 des Leiterplattenteiles 41.

An die Sendeelektroden 411 werden jeweils Wechselspannungssignale mit gleicher Frequenz angelegt. Diese Wechselspannungssignale haben eine unterschiedliche Phasenlage.

Je nach Überlappung der kleineren Empfangselektroden 512 werden die Signale unterschiedlich stark übertragen. Die Summe der über die Empfangselektroden- 412 eingekoppelten Wechselspannungssignale wird über die größeren Sendeelektroden 511, die über Leiterbahnen 513 mit dem Empfangselektroden 512 verbunden sind, zur Empfangselektrode 412, zurückgesendet. Das Empfangssignal hat nun eine Phasenlage, die im direkten Zusammenhang mit der Verdrehung der Leiterplatte 5 steht. Gemäß Figur 5 kann über die Phasenlage des Empfangssignals der relative Winkel im Winkelbereich α festgestellt werden.

Die überlappenden Flächen der Elektroden 411 und 512 bilden jeweils einen Plattenkondensator, dessen Kapazität gemäß dem vereinfachten Ersatzschaltbild der Figur 6 proportional zur überlappenden Fläche ist. Dabei zeigt die Figur 6 den vereinfachten elektrischen Zusammenhang. Der Kondensator C1 nimmt mit dem Drehwinkel zu und der Kondensator C2 nimmt mit dem Drehwinkel ab. Der Kondensator C0 ist der Rückkoppel-Kondensator, dessen Kapazität gleich bleibt.

An den Eingang A und B des Messsystems werden Sinussignale mit unterschiedlicher Phasenverschiebung eingekoppelt. Die Größe der Kondensatoren C1 und C2 steht mechanisch in direktem Zusammenhang. Die Abhängigkeit zum Verdrehwinkel α kann mit der Formel (1) beschrieben werden. Es gilt:

$$C_1(\alpha) = C \cdot \alpha$$
$$C_2(\alpha) = C \cdot (1 - \alpha) \qquad (1)$$

Das Ausgangssignal C ist ein Sinussignal mit einer Phasenverschiebung in Abhängigkeit zur Verdrehung α. Die nachfolgende Formel (2) zeigt den mathematischen Zusammenhang zwischen der Verdrehung α und der resultierenden Phase φ des Messsignals. Die sich ändernde Amplitude wird nicht beachtet. Es gilt:

$$(2)$$

$$\frac{1}{j\omega C_1(\alpha)} \cdot \cos(\omega t + 0) + \frac{1}{j\omega C_2(\alpha)} \cdot \cos(\omega t + \pi) = \left( \frac{1}{j\omega C_1(\alpha)} + \frac{1}{j\omega C_2(\alpha)} \right) \cdot \cos(\omega t + \varphi)$$

Zur Erhöhung der Genauigkeit der Winkelmessung wird der Winkel vorzugsweise in drei Stufen, nämlich der Stufe 1, der Stufe 2 und der Stufe 3 gemäß den Figuren 7 urid 8 ermittelt. Bei der Stufe 1 wird der komplette Winkel in einem Sektor untergebracht. Das im Zusammenhang mit der Figur 2 erläuterte Elektrodensystem ist in der Stufe 1 nur einmal vorhanden. Die Stufe 2 umfasst 5 Sektoren, von denen jeder ein Meßsystem enthält. Die Stufe 3 umfasst 45 Sektoren, von denen jeder ein Meßsystem umfasst. Die Stufe 1 ist im Innenbereich des Leiterplattenteiles 42 untergebracht, wie dies die Figur 8 zeigt.

Die Stufe 2 ist gemäß Figur 7 im Innenbereich des Leiterplattenteiles 41 für die Winkelmessung untergebracht. Die Stufe 3 ist im äußeren Bereich des Leiterplattenteiles 41 für die Winkelmessung angeordnet, wie dies ebenfalls die Figur 7 zeigt. Die Sektoren der Stufe 3 sind auch im äußeren Bereich des Leiterplattenteiles 42 vorhanden (Figur 8). Die Leiterplatten 5 und 6 sind entsprechend ausgebildet. Die Trennung der Stufe 1 von der Stufe 2 auf die zwei Leiterplattenteile 41 und 42 ist möglich, weil der relative Winkel zwischen den beiden Leiterplatten 5, 6 sehr klein ist. Eine relativ kleine Verdrehung der Lenksäule 3 hat keine Auswirkung auf die Winkelmessung.

Die phasenverschobenen Signale der drei Stufen werden gleichzeitig aufgenommen. Das ermöglicht Winkelmessungen bei einer hohen Drehgeschwindigkeit.

Der absolute Winkel wird über die Werte der drei Stufen ermittelt. Es liegen zur Berechnung drei digitale Werte vor, für jede Stufe ein Wert (maximaler digitaler Wert "Byte" bei 10Bit Datentiefe: 1024). Die erste Stufe besteht aus einem Sektor. Die zweite Stufe aus X Untersektoren und die dritte Stufe aus Y Untersektoren. Die Messung der ersten Stufe bestimmt den Sektor X und das zweite Messergebnis den Sektor Y. Das dritte Messergebnis zeigt die Position in dem Y Sektor. Die Messergebnisse der ersten Stufe und der zweiten Stufe zur Findung des Sektors Y haben Toleranzen. Diese werden mit den Formeln (3), (4) und (5) ausgeglichen. Es gilt:

$$Stufe1 = Signal1 \cdot X \qquad\qquad (3)$$

$$Stufe2 = \frac{Y}{X} \cdot \text{mod}\left[ \text{mod}\left( Signal2 - Stufe1 + \frac{Byte}{2}; Byte \right) + Stufe1 - \frac{Byte}{2}; Byte \cdot X \right] \qquad (4)$$

$$Stufe3 = \text{mod}\left[ \text{mod}\left( Signal3 - \text{mod}(Stufe2; Byte) + \frac{Byte}{2}; Byte \right) + Stufe2 - \frac{Byte}{2}; Byte \cdot Y \right] \qquad (5)$$

Der Außenbereich der Leiterplatte 6 für die Kraftmessung ist für die notwendige zweite Winkelmessung erforderlich. Die Außenbereiche der reflektierenden Leiterplatten 5, 6 sind in der Konstruktion gleich. Die Differenz der beiden Winkel ergibt den Verdrehungswinkel der Welle.

Vorzugsweise erfolgt die Erzeugung der Sendesignale mit einem Signalgenerator 67, der in der Auswerteelektronik 60 enthalten ist. Die vom Signalgenerator 67 erzeugten Signale werden über die genannten Leiterbahnen 49 an den Kraft- und Winkelsensor 1 angelegt. Die von diesem ermittelten Signale werden wieder über Leiterbahnen 49 der Auswerteelektronik 60 zugeführt und in dieser durch einen Verstärker 68 verstärkt, nachfolgend durch ein Bandpassfilter 62 gefiltert und durch einen Komparator 69 gegeben, der aus dem ihm vom Bandpassfilter 62 zugeführten Sinussignal ein Rechtecksignal mit einer bestimmten Phasenverschiebung erzeugt. Schließlich erzeugt dann der Komparator 64 für die Messung der Phasenverschiebung das Ergebnissignal.

Vorzugsweise wird für die analoge Auswertung eine zweckmäßigerweise in Modulform vorhandene Auswerteelektronik 60, z.B. ein Mikro-Controller, verwendet, der die analogen Komponenten auf einem integrierten Schaltkreis aufweist. Spezielle Außenbeschaltungen sind dann vorteilhafterweise nicht erforderlich. Die Aufbereitung der vier Messsignale erfolgt in der Auswerteelektronik 60 parallel.

Im Zeitraum von einer Periode der Trägerfrequenz werden vier Phasen aufgenommen. Das bedeutet eine Messdauer von 272 µs.

**Bezugszeichen**

1    Kraft- und Winkelsensor

| | |
|---|---|
| 2 | Gehäuse |
| 3 | Lenksäule |
| 4 | Hauptleiterplatte |
| 5 | Leiterplatte |
| 6 | Leiterplatte |
| 7 | Flanschelement |
| 8 | Buchsenteil |
| 9 | Flanschelement |
| 10 | Buchsenteil |
| 11 | Aussparung |
| 12 | Öffnung |
| 14 | Mitnehmerteil |
| 16 | Vorsprungbereich |
| 18 | Mitnehmerteil |
| 21 | Gehäuseteil |
| 22 | Gehäuseteil |
| 23 | Öffnung |
| 24 | Öffnung |
| 25 | Wandteil |
| 26 | Wandteil |
| 27 | Flanschteil |
| 28 | Flanschteil |
| 30 | Kontaktelemente |
| 31 | Bereich |
| 32 | Wellenteil |
| 33 | Wellenteil |
| 41 | Leiterplattenteil |
| 42 | Leiterplattenteil |
| 43 | Trägerschicht |
| 49 | Leiterbahnen |
| 50 | Gehäuseaussparung |
| 51 | Öffnung |
| 60 | Auswerteelektronik |
| 61 | Öffnung |
| 62 | Bandpassfilter |
| 64 | Komparator |
| 65 | Aussparung |
| 66 | Vorsprung |
| 67 | Signalgenerator |
| 68 | Verstärker |
| 69 | Komparator |
| 302 | Torsionsstab |
| 411 | Sendeelektroden |
| 412 | Empfangselektroden |
| 413 | Leiterbahnen |
| 421 | Sendelektroden |
| 422 | Empfangselektroden |
| 423 | Leiterbahnen |
| 511 | Sendeelektroden |
| 512 | Empfangselektroden |
| 513 | Leiterbahnen |
| 611 | Sendeelektroden |
| 612 | Empfangselektroden |
| 613 | Leiterbahnen |

**Patentansprüche**

1.  Kraft- und Winkelsensor zur Messung des Drehwinkels einer Welle (3) und einer auf einen Torsionsstab (303) ausgeübten Kraft, der zwei Wellenteile (32, 33) der Welle (3) miteinander verbindet, **dadurch gekennzeichnet, dass** in einem Gehäuse (2), durch das die Welle (3) verläuft, eine in Bezug auf das Gehäuse (2) drehfest angeordnete Hauptleiterplatte (4), die eine mittige Öffnung (12) besitzt, durch die die Welle (3) verläuft, an einer Seite der Hauptleiterplatte (4) eine drehfest auf dem einen Wellenteil (32) angeordnete erste Leiterplatte (5) zur Messung des Drehwinkels, die eine mittige Öffnung (51) besitzt, durch die das eine Wellenteil (32) verläuft, und an der anderen Seite der Hauptleiterplatte (4) eine drehfest mit dem anderen Wellenteil (33) verbundene zweite Leiterplatte (6) zur Messung der Kraft angeordnet sind, welche eine mittige Öffnung (51) besitzt, durch die das andere Wellenteil (33) verläuft, dass die Ebenen der Hauptleiterplatte (4), der ersten Leiterplatte (5) und der zweiten Leiterplatte (6) jeweils senkrecht zur Längsachse der Welle (3) verlaufen, und dass an den einander zugewandten Flächen der Hauptleiterplatte (4) und der ersten Leiterplatte (5) sowie an den einander zugewandten Flächen der Hauptleiterplatte (4) und der zweiten Leiterplatte (6) zur Messung des Drehwinkels bzw. der Kraft sich gegenüber liegend Elektroden zur kapazitiven Messung der Verdrehung zwischen der ersten Leiterplatte (5) und der Hauptleiterplatte (4) bzw. der Verdrehung zwischen der zweiten Leiterplatte (6) und der ersten Leiterplatte (5) angeordnet sind.

2.  Kraft- und Winkelsensor nach Anspruch 1, **dadurch gekennzeichnet, dass** zur drehfesten Verbindung die erste Leiterplatte (5) über ein erstes Buchsenteil (8) mit dem einen Wellenteil (32) der Welle (3) verbunden ist, wobei ein erstes Mitnehmerteil (18) für das erste Buchsenteil (8) auf dem einen Wellenteil (32) befestigt ist.

3.  Kraft- und Winkelsensor nach Anspruch 1 oder 2, **dadurch gekennzeichnet, dass** zur drehfesten Verbindung die zweite Leiterplatte (6) über ein zweites Buchsenteil (10) mit dem anderen Wellenteil (33) der Welle (3) verbunden ist, wobei ein zweites Mitnehmerteil (14) für das zweite Buchsenteil (10) auf dem anderen Wellenteil (33) befestigt ist.

4.  Kraft- und Winkelsensor nach Anspruch 2, **dadurch gekennzeichnet, dass** die der Hauptleiterplatte (4) abgewandte Fläche der ersten Leiterplatte (5) an einem Flanschelement (9) des ersten Buchsenteiles (8) anliegt, das an der ersten Leiterplatte (5) befestigt, vorzugsweise verrastet ist.

5.  Kraft- und Winkelsensor nach Anspruch 3, **dadurch gekennzeichnet, dass** die der Hauptleiterplatte (4) abgewandte Fläche der zweiten Leiterplatte (6) an einem Flanschelement (7) des zweiten Buchsenteiles (10) anliegt, das an der zweiten Leiterplatte (6) befestigt, vorzugsweise verrastet ist.

6.  Kraft- und Winkelsensor nach einem der Ansprüche 1 bis 5, **dadurch gekennzeichnet, dass** die Elektroden an der der ersten Leiterplatte (5) zugewandten Seite der Hauptleiterplatte (4) erste Sendeelektroden (411) entlang eines ersten Umfangs der Hauptleiterplatte (4) verteilt und erste Empfangselektroden (412) entlang eines zweiten Umfangs der Hauptleiterplatte (4) verteilt aufweisen, an der der zweiten Leiterplatte (6) zugewandten Seite der Hauptleiterplatte (4) zweite Sendeelektroden (421) entlang eines dritten Umfangs der Hauptleiterplatte (4) verteilt und zweite Empfangselektroden (422) entlang eines vierten Umfangs der Hauptleiterplatte (4) verteilt aufweisen, an der der Hauptleiterplatte (4) zugewandten Seite der ersten Leiterplatte (5) den ersten Sendeelektroden (411) der Hauptleiterplatte (4) gegenüber liegend dritte Empfangselektroden (512) und den ersten Empfangselektroden (412) der Hauptleiterplatte (4) gegenüber liegend dritte Sendeelektroden (511) aufweisen, und an der der Hauptleiterplatte (4) zugewandten Seite der zweiten Leiterplatte (6) den zweiten Sendeelektrcden (421) der Hauptleiterplatte (4) gegenüber liegend vierte Empfangselektroden (612) und den zweiten Empfangselektroden (422) der Hauptleiterplatte (4) gegenüber liegend vierte Sendeelektroden (611) aufweisen, wobei Sendesignale von den ersten Sendelektroden (411) zu den dritten Empfangselektroden (512), von diesen zu den dritten Sendelektroden (511) und von diesen zu den ersten Empfangselektroden (412) übertragen werden sowie Sendesignale von den zweiten Sendeelektroden (421) zu den vierten Empfangselektroden (612), von diesen zu den vierten Sendeelektroden (611) und von diesen zu den zweiten Empfangselektroden (422) übertragen werden.

7.  Kraft- und Winkelsensor nach einem der Ansprüche 1 bis 6, **dadurch gekennzeichnet, dass gekennzeichnet**, dass die Hauptleiterplatte (4) aus einem ersten (41) und einem zweiten (42) Leiterplattenteil besteht, die parallel zueinander angeordnet sind, dass am ersten Leiterplattenteil (41), das eine mittige Öffnung (12) aufweist, die ersten Sendeelektroden (411) und die ersten Empfangselektroden (413) angeordnet sind, dass am zweiten Leiterplattenteil (42), das ebenfalls eine mittige Öffnung (12) aufweist, die zweiten Sendeelektroden (421) und die zweiten Empfangselektroden (422) angeordnet sind, dass das erste Leiterplattenteil (41) und das zweite Leiterplattenteil (42) derart miteinander verbunden sind, dass die mittige Öffnung (12) des ersten Leiterplattenteiles (41) zur mittigen Öffnung (12) des zweiten Leiterplattenteiles (42) ausgerichtet ist, und dass an den einander zugewandten Flächen des ersten Leiterplattenteils (41) und des zweiten Leiterplattenteils (42) jeweils von einem externen Ort jeweils weitere Leiterbahnen (49) zu den am ersten Leiterplattenteil (41) angeordneten ersten Sendeelektroden (411) und zu den am zweiten Leiterplattenteil (42) angeordneten zweiten Sendeelektroden (421) und jeweils von den ersten Empfangselektroden (412) und von den zweiten Empfangselektroden (422) des zweiten Leiterplattenteiles (42) zu dem externen Ort verlaufen.

8. Kraft- und Winkelsensor nach Anspruch 7, **dadurch gekennzeichnet, dass** die weiteren Leiterbahnen (49) jeweils über Durchkontaktierungen des ersten Leiterplattenteiles (41) bzw. des zweiten Leiterplattenteiles (42) mit den ersten Sendeelektroden (411) bzw. den zweiten Sendeelektroden (421) bzw. den ersten Empfangselektroden (412) bzw. den zweiten Empfangselektroden (422) in Verbindung stehen.

9. Kraft- und Winkelsensor nach einem der Ansprüche 1 bis 8, **dadurch gekennzeichnet, dass** die ersten Sendeelektroden (411), die zweiten Sendeelektroden (421), die ersten Empfangselektroden (412), die zweiten Empfangselektroden (422), die dritten Empfangselektroden (512), die dritten Sendeelektroden (511), die vierten Empfangselektroden (612) und die vierten Sendeelektroden (611) jeweils die Form von auf den entsprechenden isolierenden Flächen des ersten Leiterplattenteils (41) bzw. des zweiten Leiterplattenteils (42) bzw. der ersten Leiterplatte (5) bzw. der zweiten Leiterplatte (6) angeordneten elektrisch leitenden Metallflächen aufweisen.

10. Kraft- und Winkelsensor nach Anspruch 9, **dadurch gekennzeichnet, dass** die Metallflächen aus Kupfer bestehen.

11. Kraft- und Winkelsensor nach Anspruch 9 oder 10, **dadurch gekennzeichnet, dass** die Metallflächen die Form von Kreissektoren oder Dreiecksform besitzen.

12. Kraft- und Winkelsensor nach einem der Ansprüche 1 bis 11, **dadurch gekennzeichnet, dass** das Gehäuse (2) aus zwei miteinander verbindbaren Gehäuseteilen (21, 22) besteht, wobei die Hauptleiterplatte (4) im Montagezustand der Gehäuseteile (21, 22) zumindest mit einem Gehäuseteil (22) drehfest verbunden ist.

13. Kraft- und Winkelsensor nach Anspruch 12, **dadurch gekennzeichnet, dass** am Umfang der Hauptleiterplatte (4) Aussparungen (65) oder Vorsprünge angeordnet sind, in die Vorsprünge (66) bzw. Aussparungen des anderen Gehäuseteils (22) im Montagezustand drehfest eingreifen.

14. Kraft- und Winkelsensor nach einem der Ansprüche 7 bis 13, **dadurch gekennzeichnet, dass** die Leiterbahnen (49) über Durchkontaktierungen des ersten Leiterplattenteiles (41) oder des zweiten Leiterplattenteiles (42) zu Kontaktelementen (30) führen, die an der Außenseite des ersten Leiterplattenteils (41) oder des zweiten Leiterplattenteils (42) angeordnet sind und im Montagezustand des ersten Gehäuseteils (21) und des zweiten Gehäuseteils (22) durch eine Gehäuseaussparung (50) des ersten Gehäuseteils (21) oder des zweiten Gehäuseteils (22) von außen zugänglich sind.

15. Kraft- und Winkelsensor nach einem der Ansprüche 7 bis 14, **dadurch gekennzeichnet, dass** eine modulartige Auswerteelektronik (60) am externen Ort angeordnet und über Durchkontaktierungen des ersten Leiterplattenteiles (41) oder des zweiten Leiterplattenteiles (42) mit weiteren Leiterbahnen (49) verbunden ist.

16. Kraft- und Winkelsensor nach einem der Ansprüche 6 bis 15, **dadurch gekennzeichnet, dass** die Hauptleiterplatte (4) das erste Leiterplattenteil (41) und das zweite Leiterplattenteil (42) zusammen mit einer Trägerschicht (43) in einem Leiterplattenverbund in Laminartechnik umfasst, wobei die Trägerschicht (43) zwischen dem ersten Leiterplattenteil (41) und dem zweiten Leiterplattenteil (42) angeordnet ist und wobei das erste Leiterplattenteil (41) die zweiten Sendeelektroden (421), die zweiten Empfangselektroden (422) und zweite Leiterbahnen (413) an der der zweiten Leiterplatte (6) zugewandten Seite und weitere Leiterbahnen (49) an der zweiten Leiterplatte (6) abgewandten Seite aufweist, wobei das zweite Leiterplattenteil (42) die ersten Sendeelektroden (411), die ersten Empfangselektroden (412) erste Leiterbahnen (423) an der der ersten Leiterplatte (5) zugewandten Seite und weitere Leiterbahnen (49) an der der ersten Leiterplatte (5) abgewandten Seite aufweist, wobei die zweiten Leiterbahnen (413) des ersten Leiterplattenteiles (41) über Durchkontaktierungen in dem ersten Leiterplattenteil (41) mit den weiteren Leiterbahnen (49) des ersten Leiterplattenteiles (41) und die ersten Leiterbahnen (423) über Durchkontaktierungen in dem zweiten Leiterplattenteil (42) mit den weiteren Leiterbahnen (49) des zweiten Leiterplattenteiles (42) in Verbindung stehen.

17. Kraft- und Winkelsensor nach Anspruch 16, **dadurch gekennzeichnet, dass** die Sende- und Empfangselektroden sowie die Leiterbahnen die Form von elektrisch leitenden Metallflächen aufweisen, die vorzugsweise aus Kupfer bestehen.

Fig.1

Fig.2

EP 1 701 136 A1

421, 422, 413

6

611, 612, 613

61

61

4 {

12

41

42

5

43

511, 512, 513

49

51

411, 412, 423

Fig. 4

Fig. 3

Fig. 4

411

411

512

512

513

513

alpha

511

412

423

511

Fig. 5

$C_1$

$C_2$

A

B

$C_0$

C

Fig. 6

Stufe 3

Stufe 2

65

65

65

41

65

31

60

30

Fig.7

Drehmoment

65

Stufe 1

65

65

42

Fig.8

60

67

49

1

49

68

62

64

69

Fig.9

**Europäisches Patentamt**

**EUROPÄISCHER RECHERCHENBERICHT**

Nummer der Anmeldung

EP 06 00 4703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 275 948 B (BEI SENSORS & SYSTEMS COMPANY, INC) 15. September 2004 (2004-09-15) * Abbildungen 1,11 * * Absatz [0028] * ----- | 1-17 | INV. G01D5/241 G01L3/10 G01L5/22 |
| A | US 3 337 789 A (ONO NAOYA ET AL) 22. August 1967 (1967-08-22) * Abbildungen 1a,1b * * Spalte 2, Zeile 6 - Spalte 3, Zeile 46 * ----- | 1-17 | |
| A | US 5 172 039 A (OWENS ET AL) 15. Dezember 1992 (1992-12-15) * Abbildungen 1-3 * * Spalte 4, Zeile 1 - Spalte 6, Zeile 63 * * Anspruch 1 * ----- | 1-17 | |
| | | | **RECHERCHIERTE SACHGEBIETE (IPC)** G01D G01L |

Der vorliegende Recherchenbericht wurde für alle Patentansprüche erstellt

| Recherchenort | Abschlußdatum der Recherche | Prüfer |
|---|---|---|
| München | 26. Juni 2006 | Faber-Jurk, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 06 00 4703

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1275948 | B | 15-09-2004 | DE | 60201226 D1 | 21-10-2004 |
| | | | DE | 60201226 T2 | 03-03-2005 |
| | | | EP | 1275948 A2 | 15-01-2003 |
| | | | JP | 2003098020 A | 03-04-2003 |
| | | | US | 6772646 B1 | 10-08-2004 |
| | | | US | 2003010138 A1 | 16-01-2003 |
| US 3337789 | A | 22-08-1967 | KEINE | | |
| US 5172039 | A | 15-12-1992 | KEINE | | |

EPO FORM P0461

Für nähere Einzelheiten zu diesem Anhang : siehe Amtsblatt des Europäischen Patentamts, Nr.12/82